# EUROPEAN PATENT APPLICATION

(11) **EP 4 757 478 A1**
(43) Date of publication of application: **10.06.2026**
(21) Application number: 23952764.1
(22) Date of filing: 23.09.2023
(51) Int. Cl.: H04W 72/512

(54) **COMMUNICATION METHOD AND APPARATUS, CHIP, CHIP MODULE, AND STORAGE MEDIUM**

(71) Applicant: Honor Device Co., Ltd., Shenzhen, Guangdong 518040 (CN)
(72) Inventor: ZHANG, Mingzhu, Shenzhen, Guangdong 518040 (CN); SHAN, Baokun, Shenzhen, Guangdong 518040 (CN)
(74) Representative: Gill Jennings & Every LLP
(86) International application number: PCT/CN2023/120904
(87) International publication number: WO 2025/060112

(57) **Abstract**

A communication method and apparatus, a chip, a chip module, and a storage medium are provided. When a first timer expires, is not running, or is not configured, and no resource is available for a delay status report, a scheduling request is triggered. One or more duration values of the first timer are less than a minimum value of one or more duration values of a second timer. A duration of the first timer is reasonably set, so that the scheduling request may be reasonably triggered when no resource is available for the delay status report, thereby sending the delay status report in a timely manner.

## Description

### TECHNICAL FIELD

This application relates to the field of communication technologies, and in particular, to a communication method and apparatus, a chip, a chip module, and a storage medium.

### BACKGROUND

Delay status information (that is, a residual delay of a data packet) may be reported to a network device through a newly introduced media access control (Media Access Control, MAC) control element (Control Element, CE), and a new process is introduced to send a delay status report. When the residual delay of the data packet is less than or equal to a threshold, the delay status report is triggered.

After the delay status report is triggered, the delay status report is directly sent through the MAC-CE if a resource exists. However, when the resource is unavailable, a scheduling request (scheduling request, SR) is triggered to request a resource for sending the delay status report. However, there is currently no corresponding solution to how to reasonably trigger the scheduling request.

### SUMMARY

This application provides a communication method and apparatus, a chip, a chip module, and a storage medium, to reasonably trigger a scheduling request, so that a delay status report may be sent in a timely manner.

According to a first aspect, a communication method is provided. The method may be performed by a terminal device, or a chip or a circuit configured for the terminal device.

The method includes: triggering a scheduling request when a first timer expires, is not running, or is not configured, and no resource is available for a delay status report, where one or more duration values of the first timer are less than a minimum value of one or more duration values of a second timer. Through this method, the duration of the first timer is reasonably set, so that the scheduling request may be reasonably triggered when the first timer expires, is not running, or is not configured, and no resource is available for the delay status report, thereby sending the delay status report in a timely manner.

In a possible implementation, the first timer is started or restarted when the delay status report is triggered. Through this implementation, in addition to triggering the delay status report, the scheduling request may be triggered in a scenario in which the first timer expires and no resource is available for the delay status report after the first timer is started or restarted, or the scheduling request may be triggered in a scenario in which the first timer is not running or is not configured and no resource is available for the delay status report.

In another possible implementation, the method further includes: starting the first timer when the first timer or second indication information indicating that the first timer is applied is configured. Through this implementation, the first timer is started after receiving the configuration information or the second indication information when the delay status report is triggered. In other words, if the first timer is not configured or the first timer is not instructed to be applied, the first timer is not started even if the delay status report is triggered.

In still another possible implementation, the delay status report includes delay status information of one or more first granularities. The method further includes: starting the first timer when the first granularity of the triggered delay status report is configured with a corresponding first timer or second indication information indicating that the corresponding first timer is applied; or starting the first timer when one or more first granularities of the triggered delay status report are configured with the corresponding first timer or the second indication information indicating that the corresponding first timer is applied. Through this implementation, the first granularity of the delay status report is configured with the corresponding first timer or the corresponding first timer that is applied to the first granularity of the delay status report, so that more accurate control may be implemented.

In still another possible implementation, the first granularity includes at least one of a logical channel (logic channel, LCH), a logical channel group (logic channel group, LCG), a data radio bearer, quality of service flow, a protocol data unit set, or a data burst.

In still another possible implementation, a unit of the duration value of the first timer is any one of symbol, slot, sub-frame, or millisecond. Through this implementation, the unit of the duration value of the first timer may be set as the symbol or the slot, so that the scheduling request may be triggered more promptly and accurately, and the delay status report may further be sent more promptly.

In still another possible implementation, the duration value of the first timer is 0 ms. Through this implementation, the scheduling request is directly triggered without a delay after the delay status report is triggered, so that the scheduling request may be triggered more promptly and accurately, and the delay status report may further be sent more promptly.

In still another possible implementation, the duration value of the first timer is associated with a service. Through this implementation, the duration value of the first timer may be set in a range of a delay requirement of the service.

In still another possible implementation, the duration value of the first timer is less than or equal to a first threshold. Through this implementation, the duration of the first timer is reasonably set, so that the scheduling request may be reasonably triggered when the first timer expires, is not running, or is not configured, and no resource is available for the delay status report, thereby sending the delay status report in a timely manner.

In still another possible implementation, the first timer is an extended timer of the second timer or the first timer is the second timer. The duration value of the first timer includes the duration value of the second timer, and/or one or more extended values; or the first timer is a scheduling request delay timer of the delay status report; or the duration value of the first timer includes one or more values, and the one or more values are partially the same as or completely different from the duration value of the second timer.

In still another possible implementation, a duration for which the first timer is used is specified through a fourth timer, or a duration for which the first timer is used is a validity duration, or the first timer becomes invalid after being started N times, and N is a positive integer greater than or equal to 1.

According to a second aspect, a communication method is provided. The method may be performed by a terminal device, or a chip or a circuit configured for the terminal device.

The method includes: starting a third timer when a scheduling request is triggered, where the third timer is configured to indicate a prohibited duration triggered by the scheduling request. Through this method, when the scheduling request is triggered, the third timer is started, and the scheduling request may be triggered again after the duration of the third timer is delayed, thereby avoiding frequently triggering the scheduling request.

In a possible implementation, the triggering a scheduling request includes: triggering the scheduling request after the delay status report is triggered and when no resource is available for the delay status report; or triggering the scheduling request after first information is sent or the first information is triggered, and when no resource is available for the first information, the third timer is not configured, or the third timer is not running, is not configured, or expires; or triggering the scheduling request after first information is sent or the first information is triggered, and when no resource is available for the first information, a first granularity corresponding to the first information is not configured with the third timer, or the first granularity corresponding to the first information is configured with the third timer or third indication information indicating that the third timer is applied, and the third timer is not running, is not configured, or expires. Through this implementation, triggering of the scheduling request may be of a delay status report granularity, or may be of the first granularity, so that the scheduling request may be accurately triggered.

In another possible implementation, the starting a third timer includes: starting the third timer when the third timer or the third indication information indicating that the third timer is applied is configured; or starting the third timer when the first granularity is configured with the corresponding third timer or the third indication information indicating that the corresponding third timer is applied; or starting the third timer when one or more first granularities are configured with the corresponding third timer or the third indication information indicating that the corresponding third timer is applied. Through this implementation, starting of the third timer may be of the delay status report granularity, or may be of the first granularity, so that the third timer can be accurately started.

In still another possible implementation, the first granularity includes at least one of a logical channel, a logical channel group, a data radio bearer, quality of service flow, a protocol data unit set, or a data burst.

In still another possible implementation, a unit of a duration value of the third timer is any one of symbol, slot, sub-frame, or millisecond. Through this implementation, the unit of the duration value of the third timer may be set as the symbol or the slot, so that the scheduling request may be triggered more promptly and accurately, and the scheduling request may further be sent more promptly.

In still another possible implementation, the duration value of the third timer is 0 ms. Through this implementation, the scheduling request is directly triggered without a delay after the scheduling request is triggered, so that the scheduling request may be triggered more promptly and accurately, and the scheduling request may further be sent more promptly.

In still another possible implementation, the duration value of the third timer is associated with a service. Through this implementation, the duration value of the third timer may be set in a range of a delay requirement of the service.

In still another possible implementation, the duration value of the third timer is less than or equal to a second threshold. Through this method, the duration of the third timer is reasonably set. When the scheduling request is triggered, the third timer is started, and the scheduling request may be triggered again after the duration of the third timer is delayed, thereby avoiding frequently triggering the scheduling request.

In still another possible implementation, a duration for which the third timer is used is specified through a fifth timer, or a duration for which the third timer is used is a validity duration, or the third timer becomes invalid after being started M times, and M is a positive integer greater than or equal to 1.

According to a third aspect, a communication method is provided. The method may be performed by a terminal device, or a chip or a circuit configured for the terminal device.

The method includes: receiving first indication information, where the first indication information is used to indicate that a scheduling request is triggered when a delay status report is triggered, or the first indication information is used to indicate whether the delay status report is configured to trigger the scheduling request; and triggering the scheduling request based on the first indication information when no resource is available for the delay status report. Through this method, when no resource is available for the delay status report, the scheduling request is triggered based on the first indication information, thereby avoiding frequently triggering the scheduling request.

According to a fourth aspect, a communication method is provided. The method may be performed by a network device, or a chip or circuit configured for the network device.

The method includes: sending first indication information, where the first indication information is used to indicate that a scheduling request is triggered when a delay status report is triggered, or the first indication information is used to indicate whether the delay status report is configured to trigger the scheduling request. Through this method, the first indication information is sent, so that the terminal device may trigger the scheduling request based on the first indication information when no resource is available for the delay status report, thereby avoiding frequently triggering the scheduling request.

According to a fifth aspect, a communication method is provided. The method may be performed by a terminal device, or a chip or a circuit configured for the terminal device.

The method includes: receiving first configuration information, where the first configuration information includes one or more of the following: a duration of the first timer according to the first aspect or any one of the implementations of the first aspect, a duration of the third timer according to the second aspect or any one of the implementations of the second aspect, the first indication information according to the third aspect or any one of the implementations of the third aspect, the second indication information indicating that the first timer is applied, the third indication information indicating that the third timer is applied, a duration or a quantity of times the first timer is used, a duration or a quantity of times the third timer is used, the duration for which the first timer is used is specified through the fourth timer, or the duration for which the first timer is used is a validity duration, the duration for which the third timer is used is specified through the fifth timer, or the duration for which the third timer is used is the validity duration. Through this method, the network side configures the duration of the first timer, the duration of the third timer, the first indication information, the second indication information indicating that the first timer is applied, the third indication information indicating that the third timer is applied, the fourth timer, and the fifth timer, so that the scheduling request may be reasonably triggered, thereby avoiding frequently triggering the scheduling request.

According to a sixth aspect, a communication method is provided. The method may be performed by a network device, or a chip or circuit configured for the network device.

The method includes: sending first configuration information, where the first configuration information includes one or more of the following: a duration of the first timer according to the first aspect or any one of the implementations of the first aspect, a duration of the third timer according to the second aspect or any one of the implementations of the second aspect, the first indication information according to the third aspect or any one of the implementations of the third aspect, the second indication information indicating that the first timer is applied, the third indication information indicating that the third timer is applied, a duration or a quantity of times the first timer is used, a duration or a quantity of times the third timer is used, the duration for which the first timer is used is specified through the fourth timer, or the duration for which the first timer is used is a validity duration, the duration for which the third timer is used is specified through the fifth timer, or the duration for which the third timer is used is the validity duration. Through this method, the network side configures the duration of the first timer, the duration of the third timer, the first indication information, the second indication information indicating that the first timer is applied, the third indication information indicating that the third timer is applied, the fourth timer, and the fifth timer, so that the scheduling request may be reasonably triggered, thereby avoiding frequently triggering the scheduling request.

According to a seventh aspect, a communication method is provided. The method may be performed by a terminal device, or a chip or a circuit configured for the terminal device.

The method includes: triggering a delay status report; and triggering a random access procedure to send the delay status report. Through this method, after the delay status report is triggered, the random access procedure is triggered to send the delay status report when no resource is available for sending the delay status report, so that the delay status report may be sent in a timely manner. It is avoided that scheduling is not reached because the sending expires.

In a possible implementation, the triggering a random access procedure to send the delay status report includes: sending the delay status report through a random access message A or a random access message 3.

With reference to the first aspect to the seventh aspect, in still another possible implementation, the delay status report is triggered when delay status information of first data is less than or equal to a second threshold.

With reference to the first aspect to the seventh aspect, in still another possible implementation, the scheduling request is used to request to send a resource of the delay status report.

With reference to the first aspect to the seventh aspect, in still another possible implementation, a priority of a logical channel of a medium access control-control element for carrying the delay status report is higher than a priority of a sidelink-buffer status report and is lower than a priority of a timing advance report. Through this implementation, the delay status report may be sent in a timely manner by reasonably setting the priority of the logical channel of the medium access control-control element for carrying the delay status report.

According to an eighth aspect, a communication apparatus is provided, which is configured to implement the communication method in any one of the foregoing implementations of the first aspect, the second aspect, the third aspect, the fifth aspect, the seventh aspect or the first aspect, the second aspect, the third aspect, the fifth aspect, or the seventh aspect. The apparatus may be a terminal device, or may be a module (for example, a processor, a chip, or a chip system) applied to a terminal device, or may be a logical node, a logical module, or software that can implement all or some of functions of the terminal device. In an implementation, the communication apparatus may include a sending unit and a receiving unit, and may further include a processing unit. The sending unit and the receiving unit may be independent, or may be combined (which may be referred to as a "transceiver unit").

According to a ninth aspect, a communication apparatus is provided, which is configured to implement the communication method in any one of the foregoing implementations of the fourth aspect, the sixth aspect or the fourth aspect, or the sixth aspect. The apparatus may be a network device, or may be a module (for example, a processor, a chip, or a chip system) applied to a network device, or may be a logical node, a logical module, or software that can implement all or some of functions of the network device. In an implementation, the communication apparatus may include a sending unit and a receiving unit, and may further include a processing unit. The sending unit and the receiving unit may be independent, or may be combined (which may be referred to as a "transceiver unit").

In a possible implementation, the foregoing communication apparatus according to the eighth aspect and the ninth aspect includes a module configured to respectively perform the foregoing method according to any one of or any one of the implementations of the first aspect to the seventh aspect.

When the communication apparatus is configured to implement the method according to the first aspect or any one of the implementations of the first aspect, the communication apparatus includes a processing unit, and may further include a transceiver unit. The processing unit is configured to trigger a scheduling request when a first timer expires, is not running, or is not configured, and no resource is available for a delay status report, where one or more duration values of the first timer are less than a minimum value of one or more duration values of a second timer.

Optionally, the processing unit is further configured to start or restart the first timer when the delay status report is triggered.

Optionally, the processing unit is further configured to start the first timer when the first timer or second indication information indicating that the first timer is applied is configured.

Optionally, the processing unit is further configured to: start the first timer when the first granularity of the triggered delay status report is configured with a corresponding first timer or second indication information indicating that the corresponding first timer is applied; or start the first timer when one or more first granularities of the triggered delay status report are configured with the corresponding first timer or the second indication information indicating that the corresponding first timer is applied.

Optionally, the first granularity includes at least one of a logical channel, a logical channel group, a data radio bearer, quality of service flow, a protocol data unit set, or a data burst.

Optionally, a unit of the duration value of the first timer is any one of symbol, slot, sub-frame, or millisecond.

Optionally, the duration value of the first timer is 0 ms.

Optionally, the duration value of the first timer is associated with a service.

Optionally, the duration value of the first timer is less than or equal to a first threshold.

Optionally, the first timer is an extended timer of the second timer or the first timer is the second timer, and the duration value of the first timer includes the duration value of the second timer, and/or one or more extended values; or the first timer is a scheduling request delay timer of the delay status report; or the duration value of the first timer includes one or more values, and the one or more values are partially the same as or completely different from the duration value of the second timer.

Optionally, a duration for which the first timer is used is specified through a fourth timer, or a duration for which the first timer is used is a validity duration, or the first timer becomes invalid after being started N times, and N is a positive integer greater than or equal to 1.

When the communication apparatus is configured to implement the method according to the second aspect or any one of the implementations of the second aspect, the communication apparatus includes a processing unit, and may further include a transceiver unit. The processing unit is configured to start a third timer when a scheduling request is triggered, where the third timer is configured to indicate a prohibited duration triggered by the scheduling request.

Optionally, the processing unit is further configured to: trigger the scheduling request after the delay status report is triggered and when no resource is available for the delay status report; or trigger the scheduling request after first information is sent or the first information is triggered, and when no resource is available for the first information, the third timer is not configured, or the third timer is not running, is not configured, or expires; or trigger the scheduling request after first information is sent or the first information is triggered, and when no resource is available for the first information, a first granularity corresponding to the first information is not configured with the third timer, or the first granularity corresponding to the first information is configured with the third timer or third indication information indicating that the third timer is applied, and the third timer is not running, is not configured, or expires.

Optionally, the processing unit is further configured to: start the third timer when the third timer or the third indication information indicating that the third timer is applied is configured; or start the third timer when the first granularity is configured with the corresponding third timer or the third indication information indicating that the corresponding third timer is applied; or start the third timer when one or more first granularities are configured with the corresponding third timer or the third indication information indicating that the corresponding third timer is applied.

Optionally, the first granularity includes at least one of a logical channel, a logical channel group, a data radio bearer, quality of service flow, a protocol data unit set, or a data burst.

Optionally, a unit of a duration value of the third timer is any one of symbol, slot, sub-frame, or millisecond.

Optionally, the duration value of the third timer is 0 ms.

Optionally, the duration value of the third timer is associated with a service.

Optionally, the duration value of the third timer is less than or equal to a second threshold.

Optionally, a duration for which the third timer is used is specified through a fifth timer, or a duration for which the third timer is used is a validity duration, or the third timer becomes invalid after being started M times, and M is a positive integer greater than or equal to 1.

When the communication apparatus is configured to implement the method according to the third aspect or any one of the implementations of the third aspect, the communication apparatus includes a transceiver unit, or may further include a processing unit. The transceiver unit is configured to: receive first indication information, where the first indication information is used to indicate that a scheduling request is triggered when a delay status report is triggered, or the first indication information is used to indicate whether the delay status report is configured to trigger the scheduling request; and trigger the scheduling request based on the first indication information when no resource is available for the delay status report.

When the communication apparatus is configured to implement the method according to the fourth aspect or any one of the implementations of the fourth aspect, the communication apparatus includes a transceiver unit, or may further include a processing unit. The transceiver unit is configured to: send first indication information, where the first indication information is used to indicate that a scheduling request is triggered when a delay status report is triggered, or the first indication information is used to indicate whether the delay status report is configured to trigger the scheduling request; and trigger the scheduling request based on the first indication information when no resource is available for the delay status report.

When the communication apparatus is configured to implement the method according to the fifth aspect or any one of the implementations of the fifth aspect, the communication apparatus includes a transceiver unit, or may further include a processing unit. The transceiver unit is configured to receive first configuration information. The first configuration information includes one or more of the following: a duration of the first timer according to the first aspect or any one of the implementations of the first aspect, a duration of the third timer according to the second aspect or any one of the implementations of the second aspect, the first indication information according to the third aspect or any one of the implementations of the third aspect, the second indication information indicating that the first timer is applied, the third indication information indicating that the third timer is applied, a duration or a quantity of times the first timer is used, a duration or a quantity of times the third timer is used, the duration for which the first timer is used is specified through the fourth timer, or the duration for which the first timer is used is a validity duration, the duration for which the third timer is used is specified through the fifth timer, or the duration for which the third timer is used is the validity duration.

When the communication apparatus is configured to implement the method according to the sixth aspect or any one of the implementations of the sixth aspect, the communication apparatus includes a transceiver unit, or may further include a processing unit. The transceiver unit is configured to send first configuration information. The first configuration information includes one or more of the following: a duration of the first timer according to the first aspect or any one of the implementations of the first aspect, a duration of the third timer according to the second aspect or any one of the implementations of the second aspect, the first indication information according to the third aspect or any one of the implementations of the third aspect, the second indication information indicating that the first timer is applied, the third indication information indicating that the third timer is applied, a duration or a quantity of times the first timer is used, a duration or a quantity of times the third timer is used, the duration for which the first timer is used is specified through the fourth timer, or the duration for which the first timer is used is a validity duration, the duration for which the third timer is used is specified through the fifth timer, or the duration for which the third timer is used is the validity duration.

When the communication apparatus is configured to implement the method according to the seventh aspect or any one of the implementations of the seventh aspect, the communication apparatus includes a processing unit and a transceiver unit. The processing unit is configured to trigger a delay status report. The transceiver unit is configured to trigger a random access procedure to send the delay status report.

Optionally, the transceiver unit is configured to send the delay status report through a random access message A or a random access message 3.

In another possible implementation, the foregoing communication apparatus in the eighth aspect and the ninth aspect includes a processor coupled to a memory. The processor is configured to implement that the apparatus performs a corresponding function in the foregoing communication method. The memory is configured to be coupled to the processor, and stores a program (an instruction) and/or data that are necessary for the apparatus. Optionally, the communication apparatus may further include a communication interface configured to implement communication between the apparatus and another network element. Optionally, the memory may be located in the communication apparatus, or may be located outside the communication apparatus.

In still another possible implementation, the foregoing communication apparatus in the eighth aspect and the ninth aspect includes a processor and a transceiver apparatus. The processor is coupled to the transceiver apparatus. The processor is configured to execute a computer program or an instruction, to control the transceiver apparatus to receive and send information. When the processor executes the computer program or the instruction, the processor is further configured to implement the foregoing method through a logical circuit or by executing a code instruction. The transceiver apparatus may be a transceiver, a transceiver circuit, or an input/output interface, which is configured to receive a signal from another communication apparatus other than the communication apparatus or send a signal from the processor to another communication apparatus other than the communication apparatus. When the communication apparatus is a chip, the transceiver apparatus is a transceiver circuit or an input/output interface.

When the foregoing communication apparatus in the eighth aspect and the ninth aspect is a chip, the sending unit may be an output unit, such as an output circuit or a communication interface, and the receiving unit may be an input unit, such as an input circuit or a communication interface. When the communication apparatus is a terminal, the sending unit may be a transmitter, and the receiving unit may be a receiver.

According to a tenth aspect, a computer-readable storage medium is provided, storing a computer program or an instruction. When the computer program or the instruction is executed, the methods in the foregoing aspects are implemented.

According to an eleventh aspect, a computer program product including an instruction is provided. The instruction, when executed on a communication apparatus, causes the communication apparatus to perform the methods in the foregoing aspects.

According to a twelfth aspect, a communication system is provided, including the communication apparatus in the eighth aspect and the communication apparatus in the ninth aspect.

### BRIEF DESCRIPTION OF DRAWINGS

FIG. 1A is a schematic diagram of an architecture of a communication system according to an embodiment of this application;
FIG. 1B is a schematic diagram of an architecture of another communication system according to an embodiment of this application;
FIG. 2 is a schematic diagram of an architecture of still another communication system according to an embodiment of this application;
FIG. 3 is a schematic diagram of a format of a delay status report according to an embodiment of this application;
FIG. 4 is a schematic diagram of reporting that a current timer cannot be multiplexed by a delay status report according to this application;
FIG. 5 is a schematic flowchart of a communication method according to an embodiment of this application;
FIG. 6A is a schematic diagram of an example of triggering a scheduling request;
FIG. 6B is a schematic diagram of another example of triggering a scheduling request;
FIG. 7 is a schematic flowchart of another communication method according to an embodiment of this application;
FIG. 8 is a schematic flowchart of still another communication method according to an embodiment of this application;
FIG. 9 is a schematic flowchart of still another communication method according to an embodiment of this application;
FIG. 10 is a schematic flowchart of still another communication method according to an embodiment of this application;
FIG. 11 is a schematic structural diagram of a communication apparatus according to an embodiment of this application; and
FIG. 12 is a schematic structural diagram of another communication apparatus according to an embodiment of this application.

### DESCRIPTION OF EMBODIMENTS

The solution provided in embodiments of this application is described below in detail with reference to the accompanying drawings.

One or more (items) involved in this application below means one (item) or more (items). "A plurality of (items)" means two (items) or more (items). A term "and/or" means an association relationship for describing associated objects and represents that three relationships may exist. For example, A and/or B may represent the following three cases: only A exists, both A and B exist, and only B exists. A character "/" generally indicates an "or" relationship between associated objects. In addition, it should be understood that although the terms such as "first" and "second" may be used in this application to describe various objects, the objects should not be limited to these terms. These terms are merely used to distinguish between the objects.

The terms "include", "have", and any variant thereof in the description of this application below are intended to cover a non-exclusive inclusion. For example, a process, a method, a system, a product, or a device that includes a series of steps or units is not limited to the listed steps or units, and instead, optionally further includes another step or unit that is not listed, or optionally further includes another step or unit that is intrinsic to the process, method, product, or device. It should be noted that, in this application, words such as "in an example" or "for example" represent giving an example, an illustration, or a description. Any method or design solution described as "in an example" or "for example" in this application should not be explained as being more preferred or having more advantages than another method or design solution. Exactly, use of the words such as "in an example" or "for example" are intended to present a concept in a specific manner.

The technology provided in this application may be applied to various communication systems. For example, the communication system may be a fourth generation (4^{th} generation, 4G) communication system (for example, a long term evolution (long term evolution, LTE) system), a fifth generation (5^{th} generation, 5G) communication system, a worldwide interoperability for microwave access (worldwide interoperability for microwave access, WiMAX) system or a wireless local area network (wireless local area network, WLAN) system, or a converged system of multiple systems, or a future communication system, for example, a 6G communication system. The 5G communication system may also be referred to as a new radio (new radio, NR) system.

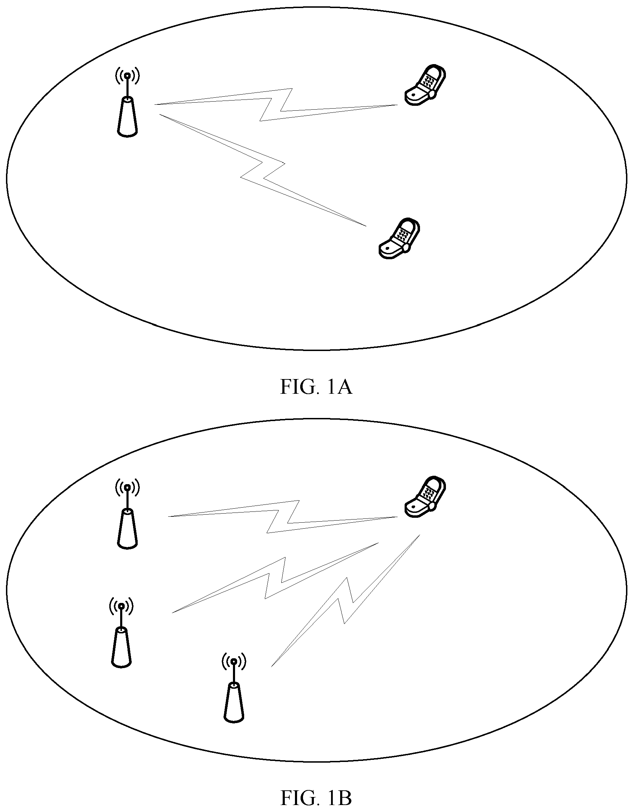

FIG. 1A is a schematic diagram of a communication system according to an embodiment of this application. The communication system may include one or more network devices (only 1 network device is shown in the figure) and one or more terminal devices connected with the network devices. One network device may transmit data or control signaling to one or more terminal devices. In another communication system shown in FIG. 1B, a plurality of network devices may also simultaneously transmit data or control signaling to one terminal device.

In the foregoing communication system, the network device may be any device having a radio transceiver function, and includes, but is not limited to, a base station (NodeB), an evolved base station (eNodeB), a base station in a 5G communication system, a base station or a network device in a future communication system, an access node in a Wi-Fi system, a wireless relay node, a wireless backhaul node, or the like. The network device may also be a radio controller in a cloud radio access network (cloud radio access network, CRAN) scenario. The network device may also be a small station, a transmission point (transmission reference point, TRP), or the like. Embodiments of this application impose no limitation on a specific technology and a specific device form used by the network device.

The terminal device is a device with a wireless transceiver function, and may be deployed on land (including indoor or outdoor), or handheld, worn, or vehicle-mounted; or may be deployed on a water surface, for example, a ship; or may also be deployed in the air, for example, an airplane, a balloon, or a satellite. The terminal device may be a mobile phone (mobile phone), a tablet computer (pad), a computer with a wireless transceiver function, a wearable device, an unmanned aerial vehicle, a helicopter, an airplane, a ship, a robot, a robot arm, a smart home device, a virtual reality (virtual reality, VR) terminal device, an augmented reality (augmented reality, AR) terminal device, a wireless terminal device in industrial control (industrial control), a wireless terminal device in self-driving (self-driving), a vehicle, a functional module in a vehicle, a wireless terminal device in a remote medical (remote medical), a wireless terminal device in a smart grid (smart grid), a wireless terminal device in transportation safety (transportation safety), a wireless terminal device (for example, a street lamp) in a smart city (smart city), a wireless terminal device in a smart home (smart home), or the like. An application scenario is not limited in embodiments of this application. Sometimes, the terminal device may also be referred to as user equipment (user equipment, UE), an access terminal device, a UE unit, a mobile station, a mobile console, a remote station, a remote terminal device, a mobile device, a terminal device (terminal), a wireless communication device, a UE proxy, a UE apparatus, or the like. A specific technology and a specific device form used by a terminal device are not limited in embodiments of this application.

Optionally, in embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems, for example, a Linux operating system, a Unix operating system, an Android operating system, an iOS operating system, or a Windows operating system, that implement service processing by using a process (process). The application layer includes applications such as a browser, an address book, word processing software, and instant messaging software. In addition, a specific structure of an execution body of a method provided in embodiments of this application is not specifically limited in embodiments of this application, provided that a program that records codes of the method provided in embodiments of this application can be run to perform communication according to the method provided in embodiments of this application. For example, the execution body of the method provided in embodiments of this application may be a terminal device or a network device, or a function module that can call and execute a program in a terminal device or a network device.

In other words, a related function of the terminal device or the network device in embodiments of this application may be implemented by one device, or may be jointly implemented by a plurality of devices, or may be implemented by one or more functional modules in a device. This is not specifically limited in embodiments of this application. It may be understood that the foregoing function may be a network element in a hardware device, may be a software function running on dedicated hardware, a combination of hardware and software, or a virtualization function instantiated on a platform (for example, a cloud platform).

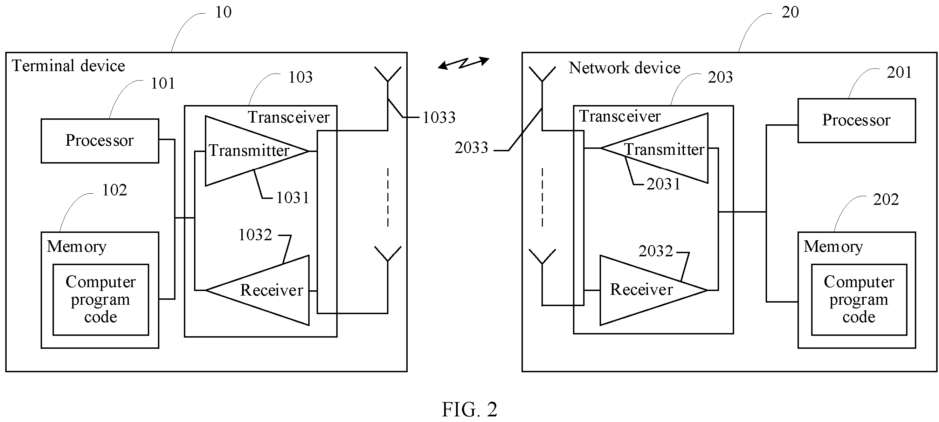

Communication between the network device and the terminal device in the communication system shown in FIG. 1A and FIG. 1B may also be represented in another form. As shown in FIG. 2, the terminal device 10 includes a processor 101, a memory 102, and a transceiver 103. The transceiver 103 includes a transmitter 1031, a receiver 1032, and an antenna 1033. The network device 20 includes a processor 201, a memory 202, and a transceiver 203. The transceiver 203 includes a transmitter 2031, a receiver 2032, and an antenna 2033. The receiver 1032 may be configured to receive transmission control information through the antenna 1033. The transmitter 1031 may be configured to send transmission feedback information to the network device 20 through the antenna 1033. The transmitter 2031 may be configured to send, through the antenna 2033, transmission control information to the terminal device 10. The receiver 2032 may be configured to receive, through the antenna 2033, transmission feedback information sent by the terminal device 10.

The processor 101/the processor 201 may be a CPU, a microprocessor, an application-specific integrated circuit (application-specific integrated circuit, ASIC), or one or more integrated circuits configured to control program execution of the solutions in this application.

The memory 102/the memory 202 may be an apparatus with a storage function. For example, the memory may be a read-only memory (read-only memory, ROM) or another type of static storage device capable of storing static information and instructions, may be a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital versatile disc, a Blu-ray disc, or the like), a magnetic disk storage medium or another magnetic storage device, or any other medium capable of carrying or storing expected program code in a form of an instruction or a data structure and capable of being accessed by a computer. This is not limited thereto. The memory may exist independently, and is connected to the processor through a communication line. Alternatively, the memory may be integrated with the processor.

The memory 102/the memory 202 is configured to store a computer-executable instruction for executing the solutions of this application, and the processor 101/the processor 201 controls execution. The processor 101/the processor 201 is configured to execute the computer-executable instruction stored in the memory 102/the memory 202, to implement the communication method provided in embodiments of this application.

Alternatively, in embodiments of this application, the processor 101/the processor 201 may perform a processing-related function in the communication method provided in the following embodiments of this application.

The computer-executable instruction in embodiments of this application may also be referred to as application program code. This is not specifically limited in embodiments of this application.

For some services such as an augmented reality (extended reality, XR) (whose service features mainly include a non-integer period, an arrival time jitter, a variable data packet size, a multi-stream service, and a relatively large data volume) and a cloud gaming (cloud gaming) service, a relatively high delay requirement is imposed. Therefore, the delay status report is triggered when a residual delay of the data packet is less than or equal to a threshold. The delay status report in this application may be used to report any report related to delay status information. For example, the report may be referred to as a delay status report (delay status report, DSR). Certainly, the report may also be another name, which is not limited in this application.

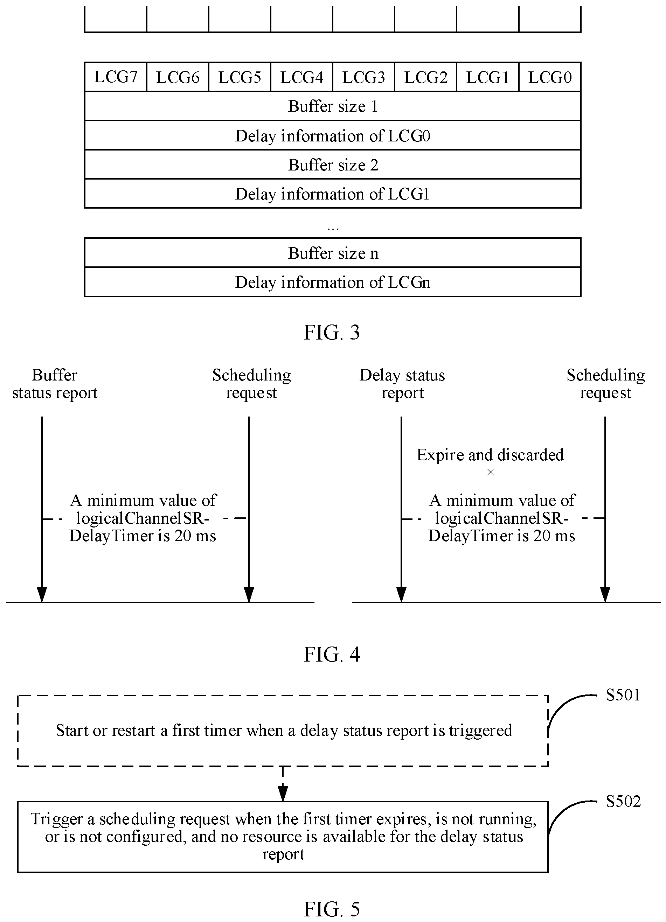

FIG. 3 is a schematic diagram of a format of a delay status report according to an embodiment of this application. The foregoing data may be carried in a plurality of logical channel groups (logic channel group, LCG), and the delay status report may include data volume information (that is, a buffer size (buffer size) shown in FIG. 3) and delay status information of the plurality of LCGs. FIG. 3 illustrates data volume information and delay status information of LCG0-LCG7. When only one LCG has delay status information to be transmitted in the delay status report, the UE reports a delay status report of a short format. When more than one LCG has delay status information to be transmitted in the delay status report, the UE reports a delay status report of a long format.

The delay status report may be carried in a new MACCE. After the UE triggers the delay status report, the UE assembles the delay status report and sends the delay status report on the resource if a resource exists. "Assembly" may also be understood as "generation". In other words, the delay status report of the foregoing format is assembled or generated.

When no resource is available for the delay status report, the scheduling request needs to be triggered, to request the resource used for the delay status report. The scheduling request may be referred to as an SR, or may certainly be referred to by another name. This is not limited in this application.

Currently, when the resource is not available, the scheduling request may be triggered through a regular buffer status report (regular BSR), and the buffer status report (buffer status report, BSR) is controlled through a logical channel scheduling request-delay timer (logicalChannelSR-DelayTimer) parameter, to avoid frequently triggering the scheduling request. In other words, when the BSR is triggered, the logicalChannelSR-DelayTimer is started, and the scheduling request is triggered when the logicalChannelSR-DelayTimer expires.

A possible duration value of the logicalChannelSR-DelayTimer is {sf20, sf40, sf64, sf128, sf512, sf1024, sf2560, spare1}, and a unit of the duration value thereof is a sub-frame (sub-frame, sf).

However, in this application, compared with the BSR, the delay status report is triggered more frequently (as long as the residual delay of the data packet is lower than a threshold). Therefore, when no resource exists, the scheduling request can be triggered frequently if the scheduling request is directly triggered without controlling the triggering frequency of the scheduling request.

The XR service usually has a period of 10 ms-30 ms. An objective of the delay status report is to report some residual delays of a service that is about to reach a delay requirement. FIG. 4 is a schematic diagram of reporting that a current timer cannot be multiplexed by a delay status report according to this application. If a current logicalChannelSR-DelayTimer is directly multiplexed, the residual delay of the XR service is < 20 ms. In this case, the residual delay expires and is discarded when the logicalChannelSR-DelayTimer is not multiplexed yet. In this case, a value of the existing logicalChannelSR-DelayTimer cannot satisfy a requirement of the delay status report.

In one aspect, dynamic scheduling after a delay may help reduce triggering of the scheduling request and a random access (RA) process. However, the existing logicalChannelSR-DelayTimer cannot satisfy a requirement of an XR service. Therefore, the logicalChannelSR-DelayTimer needs to be enhanced.

In another aspect, to send the delay status report as soon as possible to obtain scheduling of a network side, so as to help the UE to send a data packet that is about to expire in a timely manner, a resource may be directly requested without using a delay, and then a delay is performed after the resource is requested.

Therefore, this application provides a communication solution. A scheduling request is triggered when a first timer expires, is not running, or is not configured, and no resource is available for a delay status report, where one or more duration values of the first timer are less than a minimum value of one or more duration values of a second timer. A duration of the first timer is reasonably set, so that the scheduling request may be reasonably triggered when no resource is available for the delay status report, thereby sending the delay status report in a timely manner.

Based on the foregoing communication system, a communication method provided in embodiments of this application is described below.

In this application, "sending information to ... (for example, a UE)" or a related description in the accompanying drawings may be understood as that a destination terminal of the information is the UE. Directly or indirectly sending information to the UE may be included. "Receiving information from ... (for example, the UE)" or "receiving information from ... (for example, the UE)", or the related description in the accompanying drawings may be understood as that a source terminal of the information is the UE, which may include directly or indirectly receiving information from the UE. Necessary processing, such as format change, may be performed on information between the source terminal and the destination terminal for sending the information, but the destination terminal may be understood as effective information from the source terminal. Similar descriptions in this application may be understood similarly, and details are not described herein again.

The communication method provided in embodiments of this application is described in detail below. It may be understood that, in this application, an example in which the UE and the network device are used as execution bodies of the interaction description is used for description, but this application does not limit the execution bodies of the interaction description. For example, the UE in the method provided in this application may also be a chip, a chip system, or a processor applied to the UE, or may be a logical node, a logical module, or software that can implement all or some of the UE. The network device in the method provided in this application may also be a chip, a chip system, or a processor applied to the network device, or may be a logical node, a logical module, or software that can implement all or some functions of the network device.

It may be understood that, in the foregoing embodiments, the methods and/or the steps implemented by the UE may also be implemented by a component (for example, a chip or a circuit) that can be used in the UE, and the methods and/or the steps implemented by the network device may also be implemented by a component (for example, a chip or a circuit) that can be used in the network device.

FIG. 5 is a schematic flowchart of a communication method according to an embodiment of this application. In an example, the method may include the following steps.

S501: Start or restart a first timer when a delay status report is triggered.

In an implementation, the delay status report may be any report including delay status information. As long as a message transfers the delay status information, the message may be the delay status report. Therefore, the delay status report may be a MAC CE, downlink control information (downlink control information, DCI), a radio resource control (radio resource control, RRC) message, a packet data convergence protocol (packet data convergence protocol, PDCP) CE, or the like. In an implementation, the delay status report may be a DSR.

In an implementation, the delay status information may be a residual delay, a maintenance delay, a buffer delay, or the like of first data. Any information related to the delay may be referred to as the delay status information.

In an implementation, the first data is uplink data, downlink data, or non-access stratum (non-access stratum, NAS) data. The first data may be control plane data, user plane data, a data packet, signaling, data transmitted in a signalling radio bearer (signalling radio bearer, SRB), or data transmitted in a data radio bearer (data radio bearer, DRB).

In an example, the UE triggers the DSR. The DSR is used to indicate the delay status information of the first data.

In an example, a scenario of triggering the delay status report may be as follows.

When the delay status information of first data is less than or equal to a threshold, the delay status report is triggered.

In an implementation, a PDCP layer of the UE receives the first data, and the delay status information of the first data is less than or equal to a threshold. In this case, the PDCP layer transmits indication information to an MAC layer, to instruct to trigger the DSR. After receiving the indication information, the MAC layer triggers the DSR.

In an implementation, when the MAC layer of the UE determines that the delay status information of the first data is less than or equal to a threshold, the delay status report is triggered.

In this embodiment, the first timer may be configured. The first timer is configured to trigger the scheduling request after prolonging the duration of the first timer after the delay status report is triggered, or may be configured to trigger a delay of the scheduling request.

After the first timer is configured, the first timer may be started when the delay status report is triggered. In other words, after the delay status report is triggered, and when no resource is available for the delay status report, the scheduling request is not immediately triggered, but is triggered after the duration of the first timer is prolonged, to avoid frequently triggering the scheduling request.

Further, when the first timer is configured, a duration or a quantity of times the first timer is used may also be configured. An implementation of the duration is a fourth timer. The fourth timer is used to specify a duration for which the first timer is used, that is, indicate how long the configured first timer is valid. For example, if first configuration information is received at a first moment, the first configuration information is used to configure the first timer, the fourth timer is started at the first moment, and a duration of the fourth timer is 100 sub-frames. In this case, the first timer can be started from the first moment to the first moment+100 sub-frames when the delay status report is triggered. After the first moment+100 sub-frames, the first timer cannot be started when the delay status report is triggered. In another implementation, the duration for which the first timer is used is a validity duration. For example, if the first configuration information is received at the first moment, and the validity duration is 100 sub-frames, the first timer becomes invalid after a 100^{th} sub-frame after the first configuration information is received. Alternatively, the first moment (the first moment is not a moment at which the first configuration information is received) is specified, and the first timer becomes invalid since the 100^{th} sub-frame after the first moment. In still another implementation, after the first timer is started N times, the first timer becomes invalid. N is an integer greater than or equal to 1.

The following several implementations of starting the first timer when the delay status report is triggered may exist.

In a first implementation, the first timer is started when the first timer or second indication information indicating that the first timer is applied is configured. The starting is of a delay status report granularity (per DSR). In an example, the network device may send configuration information to the UE, to configure the first timer. Further, after configuring the first timer, the network device may further send the second indication information to the UE, to instruct to apply the first timer. The UE starts the first timer after receiving the configuration information or the second indication information when the delay status report is triggered. In other words, if the first timer is not configured or the first timer is not instructed to be applied, the first timer is not started even if the delay status report is triggered.

In a second implementation, the first timer is started when the first granularity of the triggered delay status report is configured with a corresponding first timer or second indication information indicating that the corresponding first timer is applied. The starting is of the first granularity. In an example, the first granularity is an LCH/an LCG/a data radio bearer (data radio bearer, DRB)/quality of service (quality of service, QoS) flow/a protocol data unit set (PDU set)/a data burst, and it may be obtained that the first granularity is a channel, a data flow, or a data set for transmission data. In an example, in this case, each LCH/LCG of the triggered delay status report corresponds to one first timer. If the LCH/LCG that triggers this delay status report is configured with a corresponding first timer or indication information indicating that the corresponding first timer is applied, the first timer is started.

In a third implementation, the first timer is started when one or more first granularities of the triggered delay status report are configured with the corresponding first timer or the second indication information indicating that the corresponding first timer is applied. In an example, the first granularity is an LCH/an LCG/a DRB/QoS/a PDU set/a data burst. In an example, in an implementation, each LCH/LCG of the triggered delay status report corresponds to one first timer in this case. If all LCHs/LCGs of the delay status report are configured with a corresponding first timer or indication information indicating that the corresponding first timer is applied, the first timer is started. In another implementation, if one or more LCHs/LCGs in all LCHs/LCGs of the delay status report are configured with the corresponding first timer or the indication information indicating that the corresponding first timer is applied, the first timer is started.

The first implementation to the third implementation above may be independent solutions or combined solutions.

In this embodiment, the second timer (for example, the foregoing logicalChannelSR-DelayTimer) is not directly multiplexed because a current value of the second timer cannot satisfy the requirement that the scheduling request is reasonably triggered when the delay status report is triggered in this application. The delay status report in this application is triggered more frequently (as long as the residual delay of the data packet is less than a threshold) compared with the BSR. When no resource is available for the delay status report, the scheduling request needs to be triggered more frequently, to request a resource. Therefore, in this embodiment, one or more duration values of the first timer are less than a minimum value of one or more duration values of a second timer.

The duration value of the first timer may have the following several implementations.

In a first implementation, a unit of the duration value of the first timer is any one of symbol, slot, sub-frame, or millisecond. The foregoing logicalChannelSR-DelayTimer uses the sub-frame as a unit. In this embodiment, the unit of the duration value of the first timer may be set as the symbol or the slot, so that the scheduling request can be triggered more promptly and accurately, and the delay status report can further be sent more promptly.

In a second implementation, the duration value of the first timer is 0 ms. In other words, the scheduling request is directly triggered without a delay after the delay status report is triggered, so that the scheduling request can be triggered more promptly and accurately, and the delay status report can further be sent more promptly.

In a third implementation, the duration value of the first timer is associated with a service. For example, the duration value of the first timer may be set in a range of a delay requirement of the service. For example, if a delay requirement of the XR service is in a range of 0 ms to 30 ms, the value of the first timer may be in a range of 0 ms to 30 ms.

In a fourth implementation, the duration value of the first timer may be a value range. In an example, the duration value of the first timer is less than or equal to a first threshold, and a value of the first timer may be an integer or a decimal. For example, if the value of the first timer is the integer, a data structure thereof is of an integer type, and the value is [A, B]. In this case, any integer between A and B may be configured.

In an example, the first timer is an extended timer of the second timer or the first timer is the second timer. In this case, the duration value of the first timer includes the duration value of the second timer, and/or one or more extended values. For example, the second timer is the foregoing logicalChannelSR-DelayTimer. In a case, the first timer is the extended timer of the second timer. In this case, the second timer includes only the extended value, or may include the duration value of the second timer and the extended value. In a case, the first timer is the second timer, and the first timer includes the duration value of the second timer and the extended value. The first timer is an improved second timer for being applied in different scenarios. To trigger the scheduling request more promptly based on the service requirement, the duration value of the first timer may include the duration value of the second timer, and/or one or more extended values.

Alternatively, the first timer is a scheduling request delay timer of the delay status report. In other words, the first timer is a newly defined timer. For example, the first timer is dedicated to the delay status report.

Alternatively, the duration value of the first timer includes one or more values, and the one or more values are partially the same as or completely different from the duration value of the second timer. In this case, the first timer is a newly defined SR delay timer.

Alternatively, a configuration granularity of the first timer is the first granularity. In other words, a corresponding timer is configured for each first granularity. Only when a behavior related to the first granularity exists, the first timer is triggered to be started or restarted.

In an implementation, if the first timer is configured, the value of the second timer is ignored. For example, when two timers are simultaneously configured, the second timer should be used for a delay status reporting procedure. When the first timer is configured, but the second timer is not configured, in one case, if indication information related to the delay status report and indicating that the first timer is applied is received, the first timer is used for the delay status reporting procedure. In another case, the first timer is directly applied to the delay status report. For example, the second timer is started if the delay status report is triggered when the second timer is configured, but the first timer is not configured, and indication information indicating that the second timer is applied to the delay status report is received. If the first timer and the second timer are simultaneously configured, the first timer is applied to the delay status report. In an implementation, if two or more first timers exist, a plurality of first timers are not simultaneously configured.

It may be understood that, in this embodiment, in addition to triggering the delay status report, after the first timer is started or restarted, the scheduling request may be triggered in a scenario in which the first timer expires and no resource is available for the delay status report, or the scheduling request may be triggered in a scenario in which the first timer is not running or is not configured and no resource is available for the delay status report. Therefore, step S501 is optional, and is represented by a dashed line in the figure.

S502: Trigger the scheduling request when the first timer expires, is not running, or is not configured, and no resource is available for the delay status report.

When the first timer expires, is not running, or is not configured, and no resource is available for the delay status report, the scheduling request is triggered, to request to send a resource of the delay status report. The scheduling request is used to request to send a resource of the delay status report.

That no resource is available for the delay status report means that no resource exists, or a resource cannot accommodate the delay status report, or a result of a logical channel priority is not satisfied.

In an implementation, the first timer is received. When the first timer expires or is not running, and no resource is available for the delay status report, the scheduling request is triggered.

In an implementation, when a first timer is running, the scheduling request cannot be triggered.

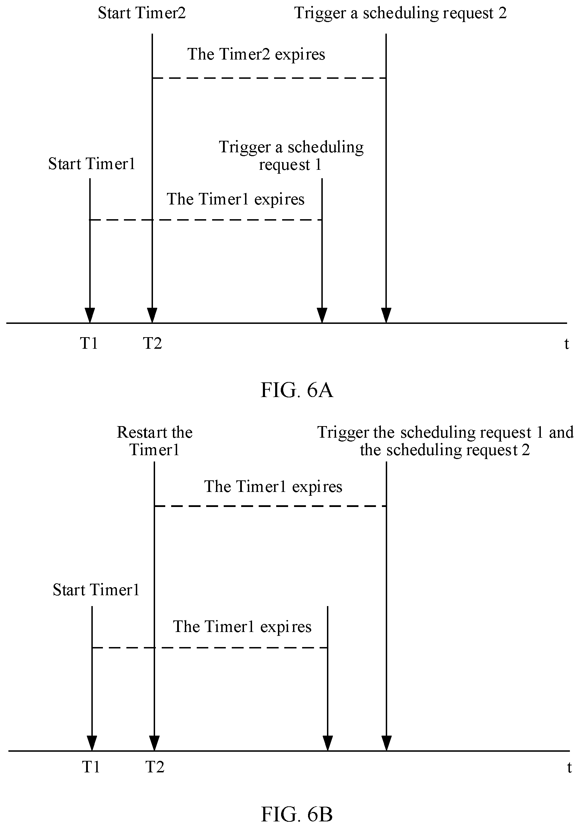

In a first implementation, when a first timer corresponding to the triggered delay status report expires, is not running, or is not configured, the scheduling request is triggered. The triggering is of a delay status report granularity (per DSR). In this case, the triggered delay status report corresponds to one first timer. If the first timer of the delay status report expires, the scheduling request is triggered. For example, FIG. 6A is a schematic diagram of an example of triggering a scheduling request. When a delay status report 1 is triggered at a moment T1, Timer1 is started. When a delay status report 2 is triggered at a moment T2, Timer2 is started. When the Timer1 expires, a scheduling request 1 (requesting a resource used for the delay status report 1) is triggered and a scheduling request 2 (requesting a resource used for the delay status report 2) is not triggered. In another implementation, FIG. 6B is a schematic diagram of another example of triggering a scheduling request. When a delay status report 1 is triggered at a moment T1, Timer1 is started. When a delay status report 2 is triggered at a moment T2, the Timer1 is restarted. The moment T2 is later than the moment T1. In this case, if the Timer1 expires, scheduling requests corresponding to all delay status reports are triggered. Therefore, that the first timer corresponding to the triggered delay status report expires may be referred to as that the first timer corresponding to the latest triggered delay status report expires.

In a second implementation, when a first timer corresponding to a first granularity of the triggered delay status report expires, is not running, or is not configured, the scheduling request is triggered. The triggering is of the first granularity. In an example, the first granularity is an LCH/an LCG/a DRB/QoS/a PDU set/a data burst, and it may be obtained that the first granularity is a channel, a data flow, or a data set for transmission data. In an example, in this case, each LCH/LCG of the triggered delay status report corresponds to one first timer. If the first timer corresponding to the LCH/LCG of the delay status report expires, the scheduling request is triggered. For example, when the delay status report 1 is triggered at the moment T1, LCG1 of the delay status report 1 has corresponding Timer1 thereof. When the Timer1 expires, the scheduling request is triggered.

In a third implementation, when a first timer corresponding to one or more first granularities of the triggered delay status report expires, is not running, or is not configured, the scheduling request is triggered. In an example, the first granularity is an LCH/an LCG/a DRB/QoS/a PDU set/a data burst. In an example, in this case, each LCH/LCG of the triggered delay status report corresponds to one first timer. If the first timers corresponding to all LCHs/LCGs of the delay status report expire, the scheduling request is triggered. In an implementation, an example in which the first granularity is the LCG is used. When the first timer corresponding to one or more LCGs in all LCGs of the triggered delay status report expires, is not running, or is not configured, the scheduling request is triggered. For example, when the delay status report 1 is triggered at the moment T1, the LCG1 of the delay status report 1 has the corresponding Timer1 and LCG2 has the corresponding Timer2. When the Timer1 expires, the scheduling request may be triggered. In another implementation, when the first timers corresponding to all LCGs of the triggered delay status report expire, do not run, or are not configured, the scheduling request is triggered. When the delay status report is triggered at a moment T0, the LCG1 of the delay status report has the corresponding Timer1 thereof, the LCG2 of the delay status report has the corresponding Timer2 thereof, and LCG3 of the delay status report has the corresponding Timer3 thereof. In this case, if the Timer1 and the Timer2 expire, the scheduling request is not triggered. When the Timer1, the Timer2, and the Timer3 all expire, the scheduling request is triggered. Therefore, that the first timers corresponding to all LCHs/LCGs of the triggered delay status report expire may be referred to as that the first timers corresponding to all LCHs/LCGs of the latest triggered delay status report expire. One or more first granularities may include all first granularities.

The first implementation to the third implementation above may be independent solutions or combined solutions.

Generally, a case in which the resource is not available also includes that the resource exists, but a logical channel priority process is not satisfied. To send the delay status report as soon as possible, a logical channel priority of a MAC CE carrying the delay status report may be increased or defined. The delay status report is carried on the MAC CE, and the delay status report may also be referred to as the MAC CE.

The delay status report reports the delay status information, and user experience of the XR is important. Based on that a PDU set discarding mechanism is introduced, if a data packet is discarded because the delay is not satisfied, an entire PDU set is discarded, and user experience of the UE is poor. Therefore, in an implementation, a priority of a logical channel of a MAC CE used for carrying the delay status report is higher than a priority of a sidelink-buffer status report (sidelink-buffer status report, SL-BSR) and is lower than a priority of a timing advance report (timing advance report, TAR).

The TAR is used to help a network side better configure a timing advance (timing advance, TA). If the UE cannot report the TAR in a timely manner, uplink loss of synchronization may be caused. It may be ensured that the network side configures the TA by defining that the priority of the logical channel of the MAC CE carrying the delay status report is lower than the priority of the TAR.

Based on an existing logical channel priority sorting, the priority of the TAR is lower than a priority of listen before talk (listen before talk, LBT). Therefore, the defined priority of the logical channel of the MAC CE carrying the delay status report does not affect the priority of the LBT.

According to a communication method provided in this embodiment of this application, the duration of the first timer is reasonably set, so that when the first timer expires, is not running, or is not configured, and no resource is available for the delay status report, the scheduling request may be reasonably triggered, thereby sending the delay status report in a timely manner.

The foregoing embodiment describes that the duration of the first timer is reasonably set, so that when the first timer expires, is not running, or is not configured, and no resource is available for the delay status report, the scheduling request is reasonably triggered, to avoid frequently triggering the scheduling request. The following embodiment describes that after the scheduling request is triggered, the third timer may also be started, and the scheduling request is triggered again after the duration of the third timer is delayed, to further avoid frequently triggering the scheduling request. The two embodiments may be independently implemented, or may be jointly implemented.

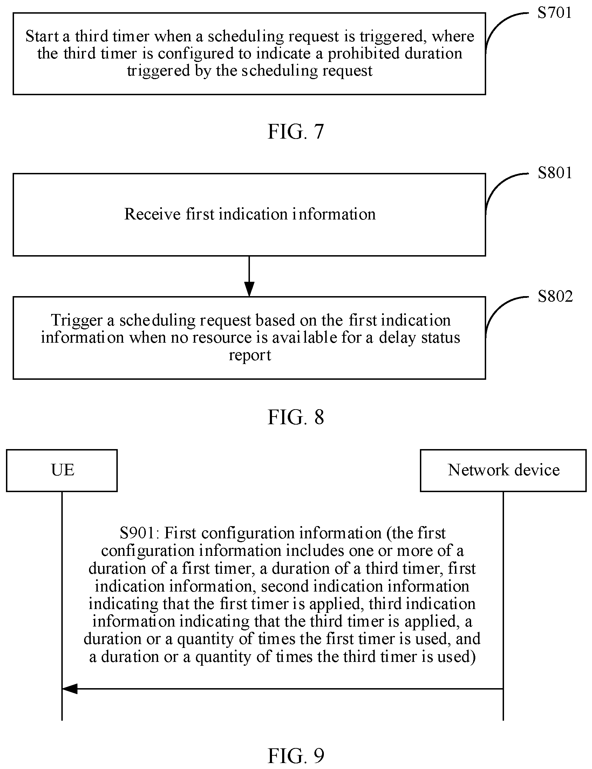

FIG. 7 is a schematic flowchart of another communication method according to an embodiment of this application. In an example, the method may include the following steps.

S701: Start a third timer when a scheduling request is triggered. The third timer is configured to indicate a prohibited duration triggered by the scheduling request.

In this embodiment, the third timer is configured. The third timer is configured to trigger the scheduling request again after the scheduling request is triggered and the duration of the third timer is delayed, to avoid frequently triggering the scheduling request.

Further, when the third timer is configured, a duration or a quantity of times the third timer is used may also be configured. An implementation of the duration is a timer, which is a fifth timer. The fifth timer is configured to specify a duration for which the third timer is used, that is, indicate how long the configured third timer is valid. For example, if first configuration information is received at a first moment, the first configuration information is used to configure the third timer, the fifth timer is started at the first moment, and a duration of the fifth timer is 100 sub-frames, the third timer may be started from the first moment to the first moment+100 sub-frames when the scheduling request is triggered. After the first moment+100 sub-frames, the third timer cannot be started when the scheduling request is triggered. In another implementation, the duration for which the third timer is used is a validity duration. For example, if the first configuration information is received at the first moment, and the validity duration is 100 sub-frames, the third timer becomes invalid after a 100^{th} sub-frame after the first configuration information is received. Alternatively, the first moment (the first moment is not a moment at which the first configuration information is received) is specified, and the third timer becomes invalid since the 100^{th} sub-frame after the first moment. In still another implementation, after the third timer is started M times, the third timer becomes invalid, M being a positive integer greater than or equal to 1.

A scenario of triggering the scheduling request may be that after the delay status report is triggered, and when no resource is available for the delay status report, the scheduling request triggered, to request a resource used for sending the delay status report. After the scheduling request is triggered, the third timer is started.

In a case, when first information needs to be sent or after the first information is triggered, and when no resource is available for the first information, the scheduling request is triggered if the third timer is not configured, or the third timer is not running, is not configured, or expires, to request to send the resource of the first information. After the scheduling request is triggered, the third timer is started. The first information may be a delay status report.

In a case, when first information needs to be sent or after the first information is triggered, and when no resource is available for the first information, the scheduling request is triggered if the third timer is not configured for the first granularity (the first granularity triggering the first information) corresponding to the first information, or the third timer is configured for the first granularity (the first granularity triggering the first information) corresponding to the first information, or indication information indicating that the third timer is applied, and the third timer is not running, is not configured, or expires, to request a resource for sending the first information. After the scheduling request is triggered, the third timer is started. The first information may be a delay status report.

It may be understood that the scheduling request may also be triggered in another scenario.

After the third timer is configured, the third timer may be started when the scheduling request is triggered. In other words, after the scheduling request is triggered, the scheduling request is not immediately triggered again, but is triggered after the duration of the third timer is prolonged, to avoid frequently triggering the scheduling request.

The following several implementations of starting the third timer when the scheduling request is triggered may exist.

In a first implementation, the third timer is started when the third timer or the third indication information indicating that the third timer is applied is configured. In an example, the network device may send configuration information to the UE, to configure the third timer. Further, after configuring the third timer, the network device may further send the indication information to the UE, to instruct to apply the third timer. The UE starts the third timer after receiving the configuration information or the indication information when the scheduling request is triggered. In other words, if the third timer is not configured or the third timer is not instructed to be applied, the third timer is not started even if the scheduling request is triggered.

In a second implementation, if the first granularity is configured with the corresponding third timer or the third indication information indicating that the corresponding third timer is applied, the third timer is started. In an example, the first granularity is an LCH/an LCG/a DRB/QoS/a PDU set/a data burst, and it may be obtained that the first granularity is a channel, a data flow, or a data set for transmission data. In an example, in this case, each LCH/LCG of the triggered scheduling request corresponds to one third timer.

In a third implementation, if one or more first granularities are configured with the corresponding third timer or the third indication information indicating that the corresponding third timer is applied, the third timer is started. In an example, the first granularity is an LCH/an LCG/a DRB/QoS/a PDU set/a data burst. In an example, in this case, each LCH/LCG of the triggered scheduling request corresponds to one third timer. In a case, if all LCHs/LCGs of the scheduling request are configured with the corresponding third timer or the third indication information indicating that the corresponding third timer is applied, the third timer is started. In another case, if one or more LCHs/LCGs in all LCHs/LCGs of the scheduling request are configured with the corresponding third timer or the third indication information indicating that the corresponding third timer is applied, the third timer is started.

The first implementation to the third implementation above may be independent solutions or combined solutions.

In this embodiment, the second timer (for example, the foregoing logicalChannelSR-DelayTimer) is not directly multiplexed. The scheduling request in this application is triggered more frequently (as long as the residual delay of the data packet is less than a threshold) compared with the BSR. When no resource is available for sending the scheduling request, the scheduling request needs to be triggered more frequently, to request a resource. Therefore, in this embodiment, one or more duration values of the third timer are less than a minimum value of one or more duration values of a second timer.

The duration value of the third timer may have the following several implementations.

In a first implementation, a unit of the duration value of the third timer is any one of symbol, slot, sub-frame, or millisecond. In this embodiment, the unit of the duration value of the third timer may be set as the symbol or the slot, so that the scheduling request can be triggered more promptly and accurately, and the scheduling request can further be sent more promptly.

In a second implementation, the duration value of the third timer is 0 ms. In other words, the scheduling request is directly triggered without a delay after the scheduling request is triggered, so that the scheduling request can be triggered more promptly and accurately, and the scheduling request can further be sent more promptly.

In a third implementation, the duration value of the third timer is associated with the service. For example, the duration value of the third timer may be set in a range of a delay requirement of the service. For example, if a delay requirement of the XR service is in a range of 0 ms to 30 ms, the value of the third timer may be in a range of 0 ms to 30 ms.

In a fourth implementation, the duration value of the third timer may be a value range. In an example, the duration value of the third timer is less than or equal to a second threshold.

In addition, the foregoing third timer is different from a scheduling request-prohibit timer (sr-ProhibitTimer). The third timer may be used for a delay-sensitive service. The timer is configured to prevent frequently triggering the scheduling request and controlling the triggering frequency of the scheduling request. The sr-ProhibitTimer is configured to control a sending frequency of the scheduling request. However, if the scheduling request is always triggered, a scheduling request during pending (pending) always exists. The third timer prevents the scheduling request from being triggered, which means that after the scheduling request is sent, no pending scheduling request to be sent within a running duration of the third timer exists.

In an implementation, the third timer is a scheduling request trigger prohibition timer used for the delay status report, and is configured to control a frequency at which the delay status report triggers the scheduling request.

In an implementation, the third timer is a newly defined scheduling request trigger prohibition timer.

In an implementation, a configuration granularity of the third timer is the first granularity.

According to a communication method provided in this embodiment of this application, when the scheduling request is triggered, the third timer is started, and the scheduling request may be triggered again after the duration of the third timer is delayed, thereby avoiding frequently triggering the scheduling request.

The foregoing embodiment describes that the timer may be used in the UE to avoid frequently triggering the scheduling request. The following embodiment describes that whether the scheduling request may be triggered when the network side may also indicate that the delay status report is triggered.

FIG. 8 is a schematic flowchart of still another communication method according to an embodiment of this application. In an example, the method may include the following steps.

S801: Receive first indication information. The first indication information is used to indicate that a scheduling request is triggered when a delay status report is triggered, or the first indication information is used to indicate whether the delay status report is configured to trigger the scheduling request.

Generally, when the delay status report is triggered and no resource is available for the delay status report, the scheduling request is triggered. In this embodiment, to avoid that the scheduling request is frequently triggered when the delay status report is triggered, the network device may control a duration of directly triggering the scheduling request when the delay status report is triggered.

Therefore, the network device may configure first indication information, to indicate that the scheduling request is triggered when the delay status report is triggered. A data format of the first indication information may be an enumeration type. The enumeration type is 0 or 1. When the enumeration type is 0, the delay status report triggers the scheduling request. When the enumeration type is 1, the delay status report does not trigger the scheduling request, and vice versa. Alternatively, the enumeration type is enabled (enabled). When the first indication information is configured as enabled, the delay status report may trigger the scheduling request.

In a first implementation, the network device may configure the first indication information. For example, the first indication information may be 1 bit. When a value of the 1 bit is a first value, the value is used to indicate that the scheduling request may be triggered when the delay status report is triggered. When a value of the 1 bit is a second value, the value is used to indicate that the scheduling request cannot be triggered when the delay status report is triggered.

In a second implementation, the network device may configure the first indication information. When the UE receives the first indication information, this indicates that the scheduling request may be triggered when the delay status report is triggered. On the contrary, when the network device does not configure the first indication information or releases the first indication information, the scheduling request cannot be triggered when the delay status report is triggered. In an example, when the delay status report is triggered for a first time, the first indication information is configured, and when the delay status report is triggered for a second time, no first indication information is configured. In other words, it is indicated that the first indication information configured above is released. Alternatively, when the delay status report is triggered for the second time, an explicit instruction used for instructing to release the first indication information configured above may exist. That is to say, when the first indication information is of a setuprelease format, the first indication information is released through the release.

S802: Trigger the scheduling request based on the first indication information when no resource is available for the delay status report.

When no resource is available for the delay status report, and the foregoing first indication information is received, or the previously configured first indication information is not released, or the first indication information indicates the delay status report to trigger the scheduling request, the scheduling request may be triggered based on the first indication information.

According to a communication method provided in this embodiment of this application, when no resource is available for the delay status report, the scheduling request is triggered based on the first indication information, thereby avoiding frequently triggering the scheduling request.

FIG. 9 is a schematic flowchart of still another communication method according to an embodiment of this application. In an example, the method may include the following steps.

S901: A network device sends first configuration information to a UE. The first configuration information includes one or more of a duration of a first timer, a duration of a third timer, first indication information, second indication information indicating that the first timer is applied, third indication information indicating that the third timer is applied, a duration or a quantity of times the first timer is used, or a duration or a quantity of times the third timer is used.

In a first implementation, the network device configures the duration of the first timer through the first configuration information. The first timer is configured to trigger the scheduling request after prolonging the duration of the first timer after the delay status report is triggered, or may be configured to instruct to trigger a delay of the scheduling request. The network device may configure the duration of the first timer for the entire delay status report, or may configure the duration of the first timer at the foregoing first granularity. For the duration value of the first timer, reference may be made to the description of the embodiment shown in FIG. 5. After the first timer is configured, the first timer is started. In other words, if the first timer is not configured, the first timer is not started even if the delay status report is triggered.

In a second implementation, the network device includes the second indication information in the first configuration information. The second indication information is used to instruct to apply the first timer. The second indication information may instruct to apply the first timer for the entire delay status report, or may indicate to apply the first timer of the first granularity. After the first timer is instructed to be applied, the first timer is started. In other words, if the first timer is not instructed to be applied, the first timer is not started even if the delay status report is triggered.

In a third implementation, the network device includes the first indication information in the first configuration information. The first indication information is used to indicate that the scheduling request is triggered when the delay status report is triggered. If the network device does not send the first indication information or the previously configured first indication information is released, the scheduling request cannot be triggered when the delay status report is triggered.

In a fourth implementation, the network device configures the duration of the third timer through the first configuration information. The third timer is configured to indicate a prohibited duration triggered by the scheduling request. The network device may configure the duration of the third timer for the entire delay status report, or may configure the duration of the third timer at the foregoing first granularity. For the duration value of the third timer, reference may be made to the description of the embodiment shown in FIG. 7. After the third timer is configured, the third timer may be started. In other words, if the third timer is not configured, the third timer is not started even if the delay status report is triggered.

In a fifth implementation, the network device includes the third indication information in the first configuration information. The third indication information is used to instruct to apply the third timer. The third indication information may instruct, for the entire scheduling request, to apply the third timer, or may instruct to apply the third timer of the first granularity. After the third timer is instructed to be applied, the third timer may be started. In other words, if the third timer is not instructed to be applied, the third timer is not started even if the scheduling request is triggered.

In a sixth implementation, the network device configures a duration or a quantity of times the first timer is used through the first configuration information. The duration for which the first timer is used is specified through a fourth timer, or a duration for which the first timer is used is a validity duration, or the first timer becomes invalid after being started N times, and N is a positive integer greater than or equal to 1.

In a seventh implementation, the network device configures a duration of a delay of the third timer or a quantity of times of the third timer through the first configuration information. The duration for which the third timer is used is specified through a fifth timer, or the duration for which the third timer is used is a validity duration, or the third timer becomes invalid after being started M times, and M is a positive integer greater than or equal to 1.

The first implementation to the seventh implementation above may be independent solutions or combined solutions.

Correspondingly, the UE receives the first configuration information.

In the foregoing first implementation, the UE configures the duration of the first timer through the first configuration information. After receiving the first configuration information, the UE performs step S502 in the foregoing embodiment. In other words, when the first timer expires or is not running, and no resource is available for the delay status report, the scheduling request is triggered. Further, step S501 may also be performed. In other words, the first timer is started or restarted when the delay status report is triggered.

In the foregoing second implementation, the first configuration information includes the second indication information indicating that the first timer is applied. After receiving the first configuration information, the UE performs step S502 in the foregoing embodiment. When the first timer expires, and no resource is available for the delay status report, the scheduling request is triggered. Further, step S501 may also be performed. In other words, the first timer is started or restarted when the delay status report is triggered.

In the foregoing third implementation, the first configuration information includes the first indication information. After receiving the first configuration information, the UE performs step S801 and step S802 in the foregoing embodiment. When no resource is available for the delay status report, and the foregoing first indication information is received, or the previously configured first indication information is not released, the scheduling request may be triggered based on the first indication information.

In the foregoing fourth implementation, the first configuration information includes the duration of the third timer. After receiving the first configuration information, the UE performs step S701 in the foregoing embodiment. When the third timer expires or is not running, the scheduling request may be triggered.

In the foregoing fifth implementation, the first configuration information includes the third indication information indicating that the third timer is applied. After receiving the first configuration information, the UE performs step S701 in the foregoing embodiment. When the third timer expires or is not running, the scheduling request may be triggered.

In the foregoing sixth implementation, the first configuration information includes the duration or the quantity of times the first timer is used. After receiving the first configuration information, the UE performs step S502 in the foregoing embodiment. In other words, within the duration or the quantity of times the first timer is used, when the first timer expires or is not running, and no resource is available for the delay status report, the scheduling request is triggered. Further, step S501 may also be performed. In other words, within the duration or the quantity of times the first timer is used, the first timer is started or restarted when the delay status report is triggered.

In the foregoing seventh implementation, the first configuration information includes the duration or the quantity of times the third timer is used. After receiving the first configuration information, the UE performs step S701 in the foregoing embodiment. Within the duration or the quantity of times the third timer is used, when the third timer expires or is not running, the scheduling request may be triggered.

According to a communication method provided in this embodiment of this application, the network side configures one or more of the duration of the first timer, the duration of the third timer, the first indication information, the second indication information indicating that the first timer is applied, the third indication information indicating that the third timer is applied, the duration or the quantity of times the first timer is used, and the duration or the quantity of times the third timer is used, so that the scheduling request may be reasonably triggered, thereby avoiding frequently triggering the scheduling request.

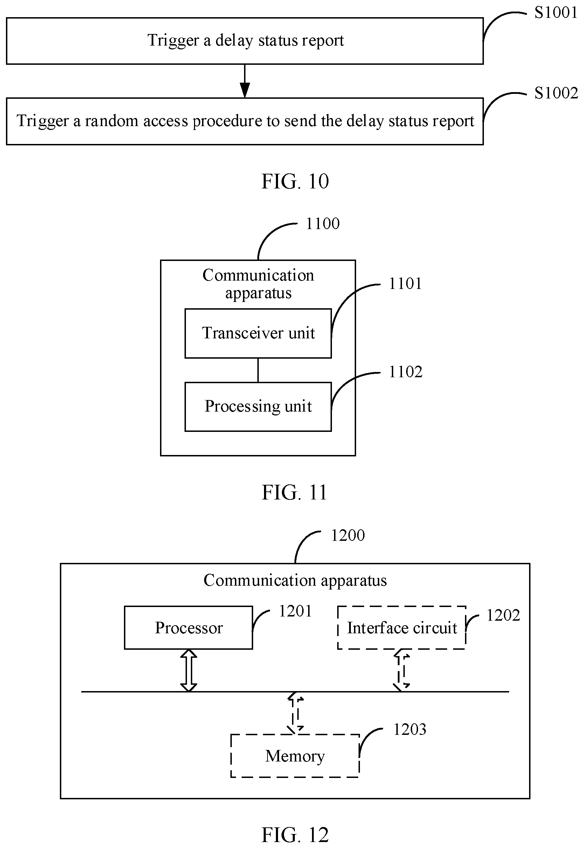

FIG. 10 is a schematic flowchart of still another communication method according to an embodiment of this application. In an example, the method may include the following steps.

S1001: Trigger a delay status report.

For specific implementation of the step, reference may be made to step S501 in the embodiment shown in FIG. 5. Details are not described herein again.

S1002: Trigger a random access procedure to send the delay status report.

In an implementation, in S1002, the random access procedure is triggered to send the delay status report when no resource is available for the delay status report.

When the network device does not configure a resource used for the delay status report, for example, a large quantity of UEs are provided in a range of the network device, the resource is insufficient, and no resource is available for the delay status report.

However, generally, the network device is configured with the resource for the UE to initiate random access. Therefore, in this embodiment, when no resource is available for sending the delay status report, the random access procedure can be triggered to send the delay status report. A scenario is that when the UE triggers the delay status report, the UE resides in a cell 1 of the network device. However, when the UE finds that there is no resource for the delay status report, and detects that a neighboring cell 2 of the cell 1 has relatively good channel quality, the cell 1 may initiate cell switching to switch the UE into the cell 2. In this case, the UE needs to initiate the random access procedure to access the cell 2. In a scenario, if there is no resource when the UE triggers the delay status report, the UE needs to obtain the resource for sending the delay status report by triggering random access.

In an implementation, the random access procedure may be two-step random access (2-step RACH). The two-step random access includes the following process: The UE sends a random access message A (a message A for short (MsgA)) to a network device, and the network device sends a random access message B (a message B for short (MsgB)) to the UE. In an example, the foregoing delay status report may be sent through the message A. It may be understood that sending the foregoing delay status report through the message A refers to carrying the foregoing delay status report when the message A is sent to perform random access. Sending the delay status report does not affect the foregoing random access procedure. The network device may configure a two-step random access resource for the delay status report, and may reduce a delay of sending and requesting a resource of the four-step random access through the scheduling request, to avoid that scheduling is not reached because the sending expires. When no resource is available for sending the delay status report, the two-step random access to send the delay status report (which may be a contention-free random access (contention free random access, CFRA) or a contention-based random access procedure) may be directly triggered, and a threshold for using the resource of the two-step random access does not need to be compared.

In another implementation, the random access procedure may be four-step random access (4-step RACH). The four-step random access include the following process: The UE sends a random access message 1 (a message 1 for short (Msg1) or a random access preamble (preamble)) to a network device, the network device sends a random access message 2 (a message 2 for short (Msg2) or a random access response (random access response, RAR)) to the UE, the UE sends a random access message 3 to the network device, and the network device sends a random access message 4 to the UE. In an example, the foregoing delay status report may be sent through the random access message 3. It may be understood that sending the foregoing delay status report through the message 3 refers to carrying the foregoing delay status report when the message 3 is sent to perform random access. Sending the delay status report does not affect the foregoing random access procedure.

For more specific content related to the two-step random access and the four-step random access, reference may be made to the prior art. Details are not described herein again.

The network side may configure a random access resource dedicated to the delay status report. When the delay status report is triggered, the random access procedure is triggered, and the delay status report is sent through the random access resource.

According to a communication method provided in this embodiment of this application, after the delay status report is triggered, the random access procedure is triggered to send the delay status report when no resource is available for sending the delay status report, so that the delay status report may be sent in a timely manner. It is avoided that scheduling is not reached because the sending expires.

The communication method provided in embodiments of this application is mainly described above. Correspondingly, an embodiment of this application further provides a communication apparatus. The communication apparatus is configured to implement the foregoing methods. The communication apparatus may be the UE in the foregoing method embodiments, or may be a component that may be used for the UE. Alternatively, the communication apparatus may be the network device in the foregoing method embodiment, or may be a component that may be used for the network device. It may be understood that, to implement the foregoing functions, the communication apparatus includes a hardware structure and/or a software module for performing a corresponding function. A person skilled in the art should be easily aware that the units and algorithm steps in the examples described with reference to embodiments disclosed in this specification can be implemented in a form of hardware or a combination of hardware and computer software in this application. Whether a function is performed by hardware or computer software driving hardware depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into function modules based on the foregoing method embodiments. For example, division into the function modules may be based on corresponding functions, or two or more functions may be integrated into one processing unit. The foregoing integrated module may be implemented in the form of hardware, or may be implemented in a form of a software functional module. It should be noted that, in embodiments of this application, the module division is an example, and is merely logical function division, and additional division manners may exist during actual implementation.

Based on a same concept of the foregoing communication method, this application further provides the following communication apparatus.

FIG. 11 is a schematic structural diagram of a communication apparatus according to an embodiment of this application. The communication apparatus 1100 includes a transceiver unit 1101 and a processing unit 1102.

When the communication apparatus is configured to implement the functions of the UE in the foregoing method embodiments, the processing unit 1102 is configured to perform operations of S501 and S502 in the embodiment shown in FIG. 5. Alternatively, the processing unit 1102 is configured to perform an operation of S701 in the embodiment shown in FIG. 7. Alternatively, the processing unit 1102 is configured to perform operations of S801 and S802 in the embodiment shown in FIG. 8. Alternatively, the transceiver unit 1101 is configured to perform an operation of the UE in S901 in the embodiment shown in FIG. 9. Alternatively, the processing unit 1102 is configured to perform operations of S1001 and S 1002 in the embodiment shown in FIG. 10.

When the communication apparatus is configured to implement the functions of the network device in the foregoing method embodiments, the transceiver unit 1101 is configured to perform an operation of the network device in S901 in the embodiment shown in FIG. 9.

For specific implementation of the transceiver unit 1101 and the processing unit 1102 above, reference may be made to descriptions in the foregoing method embodiments.

FIG. 12 is a schematic structural diagram of another communication apparatus according to an embodiment of this application. The communication apparatus 1200 includes one or more processors 1201 (one processor is illustrated in the figure). Optionally, the communication apparatus 1200 may further include a memory 1203 (which is represented by a dashed line in the figure). The memory 1203 is configured to store an instruction to be executed by the processor 1201, store input data required for the processor 1201 to run the instruction, or store data generated after the processor 1201 runs the instruction. Optionally, the communication apparatus 1200 may further include an interface circuit 1202 (which is represented by a dashed line in the figure). The processor 1201 and the interface circuit 1202 are coupled to each other. It may be understood that the interface circuit 1202 may be a transceiver or an input/output interface. The processor 1201 is configured to implement the functions of the processing unit 1102 in the embodiment shown in FIG. 11, and the interface circuit 1202 is configured to implement the functions of the transceiver unit 1101 in the embodiment shown in FIG. 11.

When the foregoing communication apparatus is a chip used for the UE, the chip implements the functions of the UE in foregoing method embodiments. The chip receives information from another module (for example, a radio frequency module or an antenna) in the UE, where the information is sent by a network device to the UE. Alternatively, the chip sends information to another module (for example, a radio frequency module or an antenna) in the UE, where the information is sent by the UE to the network device.

When the foregoing communication apparatus is a chip to be used in the network device, the chip implements the function of the network device in the foregoing method embodiments. The chip receives information from another module (for example, a radio frequency module or an antenna) in the network device, where the information is sent by the UE to the network device. Alternatively, the chip sends information to another module (for example, a radio frequency module or an antenna) in the network device, where the information is sent by the network device to the UE.

In addition, it should be noted that the foregoing transceiver unit and/or processing unit may be implemented through a virtual module. For example, the processing unit may be implemented through a software functional unit or a virtual apparatus, and the transceiver unit may be implemented through a software function or a virtual apparatus. Alternatively, the processing unit or the transceiver unit may be implemented through a physical apparatus. For example, if the apparatus is implemented through a chip/chip circuit, the transceiver unit may be an input/output circuit and/or a communication interface, to perform an input operation (corresponding to the foregoing receiving operation) and an output operation (corresponding to the foregoing sending operation). The processing unit is an integrated processor, a microprocessor, or an integrated circuit.

In this application, the module division is an example, and is merely logical function division, and additional division manners may exist during actual implementation. In addition, functional modules in examples of this application may be integrated into one processor, or may exist alone physically, or two or more modules may be integrated into one module. The foregoing integrated module may be implemented in the form of hardware, or may be implemented in a form of a software functional module.

It may be understood that, the processor in this embodiment of this application may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

An embodiment of this application further provides a computer-readable storage medium. The computer-readable storage medium stores a computer program or an instruction. When the computer program or the instruction is executed, the methods in the foregoing embodiments are implemented.

An embodiment of this application provides a computer program product including an instruction. The instruction, when executed on a computer, cause the computer to perform the methods in the foregoing embodiments.

An embodiment of this application further provides a communication system, including the foregoing communication apparatus.

An embodiment of this application further provides a circuit. The circuit is coupled to a memory. The circuit is configured to perform the methods in the foregoing embodiments. The circuit may include a chip circuit.

When the foregoing communication apparatus is a module used for a base station, the module in the base station implements the functions of the base station in the foregoing method embodiments. The module in the base station receives information from another module (for example, a radio frequency module or an antenna) in the base station, where the information is sent by a first node to the base station. Alternatively, the module in the base station sends information to another module (for example, a radio frequency module or an antenna) in the base station, where the information is sent by the base station to the first node. The module in the base station herein may be a baseband chip in the base station, or may be a CU, a DU or another module, or may be an apparatus in an open radio access network (open radio access network, O-RAN) architecture, for example, an open CU, an open DU, or another apparatus.

It should be noted that the foregoing units or one or more of the units may be implemented through software, hardware, or a combination thereof. When any one of the foregoing units or the units are implemented through software, the software exists in a form of a computer program instruction and is stored in a memory, and a processor may be configured to execute the program instruction and implement the foregoing method process.

In this application, the processor may be a general-purpose processor, a digital signal processor, an application specific integrated circuit, a field programmable gate array or another programmable logic device, a discrete gate or a transistor logic device, a discrete hardware component, or all or some of the circuits configured to implement a processing function in the foregoing devices. The processor may implement or execute the methods, the steps, and the logical block diagrams disclosed in this application. The general-purpose processor may be a microprocessor, any conventional processor, or the like. The steps of the methods disclosed with reference to this application may be directly implemented by a hardware processor, or may be implemented by a combination of hardware and a software module in a processor.

When the foregoing unit or the units are implemented through hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, which may run necessary software or does not rely on software to perform the foregoing method process.

Optionally, an embodiment of this application further provides a chip system, including one or more processors and an interface, where the one or more processors are coupled to a memory through the interface. When the one or more processors execute a computer program or an instruction in the memory, the chip system is enabled to execute the method in any one of the foregoing method embodiments. Optionally, the chip system may include a chip, or may include a chip and another discrete device. This is not specifically limited in embodiments of this application.

Alternatively, the memory in this application may be a circuit or any other apparatus that can implement a storage function, and is configured to store a program instruction and/or data. The memory is any other medium that can be configured to carry or store desired program code in the form of instructions or data structures and can be accessed by a computer, which is not limited thereto. For example, the memory may be a non-volatile memory such as a digital versatile disc (digital versatile disc, DVD), a hard disk drive (hard disk drive, HDD), or a solid-state drive (solid-state drive, SSD), or may be a volatile memory such as a random-access memory (random-access memory, RAM).

It should be understood that, in the description of this application, unless otherwise stated, "/" indicates that associated objects are in an "or" relationship. For example, A/B may represent A or B, where A and B may be singular or plural. In addition, in the description of this application, unless otherwise stated, "a plurality of" means two or more. "At least one of the following items (pieces)" or a similar expression thereof refers to any combination of these items, including any combination of singular items (pieces) or plural items (pieces). For example, at least one (piece) of a, b, or c may represent a, b, c, a-b, a-c, b-c, or a-b-c, where a, b, and c may be one or more. In addition, to clearly describe the technical solutions in embodiments of this application, terms such as "first" and "second" are used to distinguish between same objects or similar objects whose functions and purposes are basically the same. A person skilled in the art may understand that the words such as "first" and "second" do not limit a number and an execution order, and the words such as "first" and "second" are unnecessarily different. In addition, in embodiments of this application, the words such as "in an example" or "for example" are used to represent giving an example, an illustration, or a description. Any embodiment or design solution described as "in an example" or "for example" in embodiments of this application should not be explained as being more preferred or having more advantages than another embodiment or design solution. Specifically, the words such as "in an example" or "for example" are intended to present the relevant concepts in a concrete manner for ease of understanding.

All or some of the foregoing embodiments may be implemented through software, hardware, firmware, or any combination thereof. When embodiments are implemented by using a software program, all or some of embodiments may be implemented in a form of a computer program product. The computer program product includes one or more computer instructions. When the computer program instructions are loaded and executed on the computer, the procedure or functions in embodiments of this application are all or partially generated. The computer may be a general-purpose computer, a special-purpose computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a server, or a data center to another website, computer, server, or data center in a wired manner (for example, through a coaxial cable, an optical fiber, or a digital subscriber line (digital subscriber line, DSL)) or a wireless manner (for example, in an infrared, radio, or microwave manner).

Although this application is described with reference to embodiments, in a process of implementing this application that claims protection, a person skilled in the art may understand and implement another variation of the disclosed embodiments by viewing the accompanying drawings, disclosed content, and appended claims. In the claims, the term "comprising" (comprising) does not exclude another component or another step, and "a" or "one" does not exclude a case of plurality. A single processor or another unit may implement several functions enumerated in the claims. Some measures are recorded in dependent claims that are different from each other, but this does not indicate that these measures cannot be combined to produce a better effect.

It may be understood that various numerical numbers in embodiments of this application are merely used for differentiation for ease of description, and are not used to limit the scope of embodiments of this application. Sequence numbers of the foregoing processes do not mean execution sequences. The execution sequences of the processes should be determined based on functions and internal logic of the processes.

In the foregoing embodiments, the descriptions of each embodiment have different focuses, and for a part that is not described in detail in an embodiment, reference may be made to the relevant description of other embodiments.

The components of the apparatus of embodiments of this application may be merged, divided, and deleted based on an actual need. A person skilled in the art may integrate or combine different embodiments in this specification and features of the different embodiments.

In this application, under the premise of no logical contradiction, examples may be mutually referenced. For example, methods and/or terms between method embodiments may be mutually referenced. For example, functions and/or terms between apparatus embodiments may be mutually referenced. For example, functions and/or terms between apparatus examples and method examples may be mutually referenced.

## Claims

1. A communication method, comprising:
triggering a scheduling request when a first timer expires, is not running, or is not configured, and no resource is available for a delay status report, wherein one or more duration values of the first timer are less than a minimum value of one or more duration values of a second timer.

2. The method according to claim 1, wherein the first timer is started or restarted when the delay status report is triggered.

3. The method according to claim 1 or 2, further comprising: starting the first timer when the first timer or second indication information indicating that the first timer is applied is configured.

4. The method according to any one of claims 1 to 3, wherein the delay status report comprises delay status information of one or more first granularities, and the method further comprises:
starting the first timer when the first granularity of the triggered delay status report is configured with a corresponding first timer or second indication information indicating that the corresponding first timer is applied; or
starting the first timer when one or more first granularities of the triggered delay status report are configured with the corresponding first timer or the second indication information indicating that the corresponding first timer is applied.

5. The method according to claim 4, wherein the first granularity comprises at least one of a logical channel, a logical channel group, a data radio bearer, quality of service flow, a protocol data unit set, or a data burst.

6. The method according to any one of claims 1 to 5, wherein a unit of the duration value of the first timer is any one of symbol, slot, sub-frame, or millisecond.

7. The method according to any one of claims 1 to 6, wherein the duration value of the first timer is 0 ms.

8. The method according to any one of claims 1 to 7, wherein the duration value of the first timer is associated with a service.

9. The method according to any one of claims 1 to 8, wherein the duration value of the first timer is less than or equal to a first threshold.

10. The method according to any one of claims 1 to 9, wherein the first timer is an extended timer of the second timer or the first timer is the second timer, and the duration value of the first timer comprises the duration value of the second timer, and/or one or more extended values; or
the first timer is a scheduling request delay timer of the delay status report; or
the duration value of the first timer comprises one or more values, and the one or more values are partially the same as or completely different from the duration value of the second timer.

11. The method according to any one of claims 1 to 10, wherein a duration for which the first timer is used is specified through a fourth timer, or a duration for which the first timer is used is a validity duration, or the first timer becomes invalid after being started N times, and N is a positive integer greater than or equal to 1.

12. A communication method, comprising:
starting a third timer when a scheduling request is triggered, wherein the third timer is configured to indicate a prohibited duration triggered by the scheduling request.

13. The method according to claim 12, wherein the triggering a scheduling request comprises:
triggering the scheduling request after the delay status report is triggered and when no resource is available for the delay status report; or
triggering the scheduling request after first information is sent or the first information is triggered, and when no resource is available for the first information, the third timer is not configured, or the third timer is not running, is not configured, or expires; or
triggering the scheduling request after first information is sent or the first information is triggered, and when no resource is available for the first information, a first granularity corresponding to the first information is not configured with the third timer, or the first granularity corresponding to the first information is configured with the third timer or third indication information indicating that the third timer is applied, and the third timer is not running, is not configured, or expires.

14. The method according to claim 12 or 13, wherein the starting a third timer comprises:
starting the third timer when the third timer or the third indication information indicating that the third timer is applied is configured; or
starting the third timer when the first granularity is configured with the corresponding third timer or the third indication information indicating that the corresponding third timer is applied; or
starting the third timer when one or more first granularities are configured with the corresponding third timer or the third indication information indicating that the corresponding third timer is applied.

15. The method according to claim 13 or 14, wherein the first granularity comprises at least one of a logical channel, a logical channel group, a data radio bearer, quality of service flow, a protocol data unit set, or a data burst.

16. The method according to any one of claims 12 to 15, wherein a unit of a duration value of the third timer is any one of symbol, slot, sub-frame, or millisecond.

17. The method according to any one of claims 12 to 16, wherein the duration value of the third timer is 0 ms.

18. The method according to any one of claims 12 to 17, wherein the duration value of the third timer is associated with a service.

19. The method according to any one of claims 12 to 18, wherein the duration value of the third timer is less than or equal to a second threshold.

20. The method according to any one of claims 12 to 19, wherein a duration for which the third timer is used is specified through a fifth timer, or a duration for which the third timer is used is a validity duration, or the third timer becomes invalid after being started M times, and M is a positive integer greater than or equal to 1.

21. A communication method, comprising:
receiving first indication information, wherein the first indication information is used to indicate that a scheduling request is triggered when a delay status report is triggered, or the first indication information is used to indicate whether the delay status report is configured to trigger the scheduling request; and
triggering the scheduling request based on the first indication information when no resource is available for the delay status report.

22. A communication method, comprising:
sending first indication information, wherein the first indication information is used to indicate that a scheduling request is triggered when a delay status report is triggered, or the first indication information is used to indicate whether the delay status report is configured to trigger the scheduling request.

23. A communication method, comprising:
receiving first configuration information, wherein the first configuration information comprises one or more of the following: a duration of the first timer according to any one of claims 1 to 11, a duration of the third timer according to any one of claims 12 to 20, the first indication information according to claim 21 or 22, the second indication information indicating that the first timer is applied, the third indication information indicating that the third timer is applied, a duration or a quantity of times the first timer is used, a duration or a quantity of times the third timer is used, the duration for which the first timer is used is specified through the fourth timer, or the duration for which the first timer is used is a validity duration, the duration for which the third timer is used is specified through the fifth timer, or the duration for which the third timer is used is the validity duration.

24. A communication method, comprising:
sending first configuration information, wherein the first configuration information comprises one or more of the following: a duration of the first timer according to any one of claims 1 to 11, a duration of the third timer according to any one of claims 12 to 20, the first indication information according to claim 21 or 22, the second indication information indicating that the first timer is applied, the third indication information indicating that the third timer is applied, a duration or a quantity of times the first timer is used, a duration or a quantity of times the third timer is used, the duration for which the first timer is used is specified through the fourth timer, or the duration for which the first timer is used is a validity duration, the duration for which the third timer is used is specified through the fifth timer, or the duration for which the third timer is used is the validity duration.

25. A communication method, comprising:
triggering a delay status report; and
triggering a random access procedure to send the delay status report.

26. The method according to claim 25, wherein the triggering a random access procedure to send the delay status report comprises: sending the delay status report through a random access message A or a random access message 3.

27. The method according to any one of claims 1 to 26, wherein the delay status report is triggered when delay status information of first data is less than or equal to a second threshold.

28. The method according to any one of claims 1 to 27, wherein the scheduling request is used to request to send a resource of the delay status report.

29. The method according to any one of claims 1 to 28, wherein a priority of a logical channel of a medium access control-control element for carrying the delay status report is higher than a priority of a sidelink-buffer status report and is lower than a priority of a timing advance report.

30. A communication apparatus, comprising a module for implementing the method according to any one of claims 1 to 29.

31. A communication apparatus, comprising a memory, a processor, and a computer program stored in the memory and executable on the processor, wherein when the processor executes the computer program, the method according to any one of claims 1 to 29 is implemented.

32. A chip, configured to perform the method according to any one of claims 1 to 29.

33. A chip module, comprising an interface component and a chip, wherein the chip is configured to perform the method according to any one of claims 1 to 29.

34. A computer-readable storage medium, storing a computer program or an instruction, wherein when the computer program or the instruction is executed by a communication apparatus, the method according to any one of claims 1 to 29 is implemented.
